(19) Europäisches Patentamt
European Patent Office
Office européen des brevets

(11) EP 3 626 482 B1

(12) EUROPEAN PATENT SPECIFICATION

(45) Date of publication and mention of the grant of the patent:
**20.01.2021 Bulletin 2021/03**

(51) Int Cl.:
***B60C 1/00*** *(2006.01)* ***C08L 9/00*** *(2006.01)*
***C08L 9/06*** *(2006.01)*

(21) Application number: **19196548.2**

(22) Date of filing: **10.09.2019**

# (54) PNEUMATIC TIRE

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2018 JP 2018177423**

(43) Date of publication of application:
**25.03.2020 Bulletin 2020/13**

(73) Proprietor: **Sumitomo Rubber Industries, Ltd.**
**Kobe-shi,**
**Hyogo-ken 651-0072 (JP)**

(72) Inventor: **MAEKAWA, Tetsuya**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 222 440**
**WO-A1-2017/195567**
**US-A1- 2013 059 965**
**US-A1- 2013 237 653**
**US-A1- 2018 179 364**
**US-A1- 2018 215 202**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 626 482 B1

## Description

BACKGROUND OF THE INVENTION

Field of the Invention

The present invention relates to a pneumatic tire.

Description of the Background Art

Conventionally, tires have been required to have various kinds of performance such as low fuel consumption performance, grip performance, abrasion resistance, and rubber strength, and grip performance and abrasion resistance have been regarded as important from the viewpoint of safety.

For example, a method in which both desired low rolling resistance performance and desired grip performance on wet ground of a tire are achieved by using a specific functional diene elastomer, a reinforcing inorganic filler, and a specific plasticizing system in combination (see, for example, Japanese Laid-Open Patent Publication (translation of PCT application) No. 2014-503619), a method in which both desired low rolling resistance performance and desired wet grip performance are achieved by using a specific plasticizing system, a specific content of a copolymer based on styrene and butadiene, and a high content of a reinforcing inorganic filler in combination (see, for example, Japanese Laid-Open Patent Publication (translation of PCT application) No. 2013-544936), etc., have been proposed. However, further improvement is desired. Further prior art rubber compositions for tires comprising SBR as a rubber component are disclosed in the following documents US 2013/0237653 A1, WO 2017/195567 A1 and US 2019/136019 A1, US 2018/0215202 A1 and US 2013/0059965 A1.

SUMMARY OF THE INVENTION

The present invention has been made to solve the above-described problem, and an object of the present invention is to provide a pneumatic tire that can have dry grip performance, wet grip performance, and abrasion resistance that are improved in a well-balanced manner.

The present invention is directed to a pneumatic tire having a tread, wherein, in a temperature distribution curve of a dynamic elastic modulus (E*) of the tread that is obtained by plotting the E* with respect to a measurement temperature thereof, the temperature at a point of intersection of a tangent line to the temperature distribution curve at -20°C and a tangent line to the temperature distribution curve at 30°C is not lower than -10°C and not higher than 10°C, and the E* at the point of intersection of the tangent line to the temperature distribution curve at - 20°C and the tangent line to the temperature distribution curve at 30°C is not greater than 30 MPa, wherein the tread is produced by using a rubber composition that contains a rubber component including a styrene-butadiene rubber and a butadiene rubber, wherein the amount of the butadiene rubber in 100 % by mass of the rubber component is not less than 5 % by mass, and wherein a temperature distribution curve of a dynamic elastic modulus (E*) of a tread rubber (after vulcanization) that is obtained by plotting the E* with respect to a measurement temperature thereof is obtained by measuring a temperature distribution curve of E* for the tread rubber (after vulcanization) in a temperature range of -120°C to 70°C under the conditions of a frequency of 10Hz, an initial strain of 10%, a dynamic strain of 2%, an amplitude of ±0.25%, and a temperature rise rate of 3°C/min using a viscoelasticity spectrometer.

Preferably, the temperature at the point of intersection of the tangent line to the temperature distribution curve at -20°C and the tangent line to the temperature distribution curve at 30°C is not lower than -10°C and not higher than 10°C, and the E* at the point of intersection of the tangent line to the temperature distribution curve at -20°C and the tangent line to the temperature distribution curve at 30°C is not greater than 20 MPa.

Preferably, the temperature at the point of intersection of the tangent line to the temperature distribution curve at -20°C and the tangent line to the temperature distribution curve at 30°C is not lower than -10°C and not higher than 10°C, and the E* at the point of intersection of the tangent line to the temperature distribution curve at -20°C and the tangent line to the temperature distribution curve at 30°C is not greater than 16 MPa.

Preferably, the temperature at the point of intersection of the tangent line to the temperature distribution curve at -20°C and the tangent line to the temperature distribution curve at 30°C is not lower than -10°C and not higher than 10°C, and the E* at the point of intersection of the tangent line to the temperature distribution curve at -20°C and the tangent line to the temperature distribution curve at 30°C is not greater than 10 MPa.

Preferably, in the temperature distribution curve of the dynamic elastic modulus (E*) of the tread that is obtained by plotting the E* with respect to the measurement temperature thereof, further, the temperature at a point of intersection of a tangent line to the temperature distribution curve at -50°C and the tangent line to the temperature distribution curve at -20°C is not lower than -30°C and not higher than -10°C, and the E* at the point of intersection of the tangent line to

the temperature distribution curve at -50°C and the tangent line to the temperature distribution curve at -20°C is not less than 700 MPa.

Preferably, the temperature at the point of intersection of the tangent line to the temperature distribution curve at -50°C and the tangent line to the temperature distribution curve at -20°C is not lower than -30°C and not higher than -10°C, and the E* at the point of intersection of the tangent line to the temperature distribution curve at -50°C and the tangent line to the temperature distribution curve at -20°C is not less than 800 MPa.

Preferably, the temperature at the point of intersection of the tangent line to the temperature distribution curve at -50°C and the tangent line to the temperature distribution curve at -20°C is not lower than -30°C and not higher than -10°C, and the E* at the point of intersection of the tangent line to the temperature distribution curve at -50°C and the tangent line to the temperature distribution curve at -20°C is not less than 1,000 MPa.

Preferably, the tread is produced by using a rubber composition that contains a rubber component including a styrene-butadiene rubber, silica, a silane coupling agent, and a resin, and that satisfies the following formulas (1) and (2).

$$A \geq 30 \qquad (1)$$

$$43 \leq (A \times B)/C \leq 1400 \qquad (2)$$

In the formulas (1) and (2), A represents a total styrene content (% by mass) of the rubber component.

In the formula (2), B represents an amount (parts by mass) of the silica per 100 parts by mass of the rubber component, and C represents an amount (parts by mass) of the resin per 100 parts by mass of the rubber component.

Preferably, an amount of the styrene-butadiene rubber in 100% by mass of the rubber component is not less than 60% by mass.

Preferably, the rubber composition further contains an oil, and an amount of the oil per 100 parts by mass of the rubber component is not greater than 15 parts by mass.

Preferably, the styrene-butadiene rubber has a weight-average molecular weight of not less than 400 thousand.

Since the present invention is a pneumatic tire having a tread in which, in a temperature distribution curve of a dynamic elastic modulus (E*) of the tread that is obtained by plotting the E* with respect to a measurement temperature thereof, the temperature at a point of intersection of a tangent line to the temperature distribution curve at -20°C and a tangent line to the temperature distribution curve at 30°C is not lower than -10°C and not higher than 10°C, and the E* at the point of intersection of the tangent line to the temperature distribution curve at - 20°C and the tangent line to the temperature distribution curve at 30°C is not greater than 30 MPa, dry grip performance, wet grip performance, and abrasion resistance can be improved in a well-balanced manner.

## BRIEF DESCRIPTION OF THE DRAWINGS

FIG. 1 is a diagram showing an example of a temperature distribution curve of E* of a tread rubber.

## DESCRIPTION OF THE PREFERRED EMBODIMENTS

The pneumatic tire of the present invention is a pneumatic tire in which, in a temperature distribution curve of a dynamic elastic modulus (E*) of a tread rubber that is obtained by plotting the E* with respect to a measurement temperature thereof, the temperature at a point of intersection of a tangent line to the temperature distribution curve at -20°C and a tangent line to the temperature distribution curve at 30°C is not lower than -10°C and not higher than 10°C, and the E* at the point of intersection of the tangent line to the temperature distribution curve at -20°C and the tangent line to the temperature distribution curve at 30°C is not greater than 30 MPa. Accordingly, dry grip performance, wet grip performance, and abrasion resistance can be improved in a well-balanced manner.

The reason why such an advantageous effect is achieved is not necessarily clear but is inferred as described below.

In the temperature distribution curve of the E* of the tread rubber that is obtained by plotting the E* with respect to the measurement temperature thereof, the point of intersection of the tangent line to the temperature distribution curve at -20°C and the tangent line to the temperature distribution curve at 30°C indicates the magnitude of the E* in a temperature region where the temperature dependency of the E* and contribution to grip performance are considered to be high. If the temperature at this point of intersection is not lower than -10°C and not higher than 10°C and the E* at this point of intersection is not greater than 30 MPa, followability of the tread rubber to a road surface is high and fracture resistance characteristics during running improves. Accordingly, dry grip performance, wet grip performance,

and abrasion resistance can be improved in a well-balanced manner. In other words, to improve the overall performance of dry grip performance, wet grip performance, and abrasion resistance of tire, which is the subject of the present invention, the solution is to have tread which satisfy both the feature of the temperature and the feature of the E*.

Next, a method for drawing each tangent line, etc., will be described with reference to FIG. 1.

In FIG. 1, an example of a temperature distribution curve C1 of the E* of the tread rubber is depicted. The tangent line to the temperature distribution curve at -20°C means a tangent line L1 at a point P1 on the temperature distribution curve C1 at a temperature of -20°C. Similarly, the tangent line to the temperature distribution curve at 30°C means a tangent line L2 at a point P2 on the temperature distribution curve C1 at a temperature of 30°C. The point of intersection of the tangent line to the temperature distribution curve at -20°C and the tangent line to the temperature distribution curve at 30°C means a point indicated by PL that is a point of intersection of the tangent line L1 and the tangent line L2. The temperature at this point of intersection means the temperature at the point indicated by PL, and the E* at this point of intersection means the E* at the point indicated by PL. When the temperature at the point indicated by PL is not lower than -10°C and not higher than 10°C and the E* at the point indicated by PL is not greater than 30 MPa, dry grip performance, wet grip performance, and abrasion resistance can be improved in a well-balanced manner.

As for the method for drawing each tangent line, the temperature distribution curve of the E* of the tread rubber may be represented by a function, and a formula for each tangent line may be calculated on the basis of the function. Specifically, in the case where the function that represents the temperature distribution curve of the E* of the tread rubber is $y = f(x)$, the tangent line to the curve at a temperature of -20°C and the tangent line to the curve at a temperature of 30°C are represented by $y = f(-20)(x+20)+f(-20)$ and $y = f(30)(x-30)+f(30)$, respectively.

In the present specification, a temperature distribution curve of a dynamic elastic modulus (E*) of a tread rubber (after vulcanization) that is obtained by plotting the E* with respect to a measurement temperature thereof is obtained by measuring a temperature distribution curve of E* for the tread rubber (after vulcanization) in a temperature range of - 120°C to 70°C under the conditions of a frequency of 10Hz, an initial strain of 10%, a dynamic strain of 2%, an amplitude of ±0.25%, and a temperature rise rate of 3°C/min using a viscoelasticity spectrometer.

In the present invention, in the temperature distribution curve of the E* of the tread rubber, the temperature at the point of intersection of the tangent line to the temperature distribution curve at -20°C and the tangent line to the temperature distribution curve at 30°C is not lower than -10°C and not higher than 10°C. Accordingly, dry grip performance, wet grip performance, and abrasion resistance can be improved in a well-balanced manner. The temperature at this point of intersection is preferably not lower than -8°C and more preferably not lower than -5°C. The temperature at this point of intersection is preferably not higher than 8°C and more preferably not higher than 5°C.

In the present invention, in the temperature distribution curve of the E* of the tread rubber, the E* at the point of intersection of the tangent line to the temperature distribution curve at -20°C and the tangent line to the temperature distribution curve at 30°C is not greater than 30 MPa. Accordingly, dry grip performance, wet grip performance, and abrasion resistance can be improved in a well-balanced manner. The E* at this point of intersection is preferably not greater than 20 MPa, more preferably not greater than 16 MPa, and further preferably not greater than 10 MPa. In addition, the lower limit of the E* at this point of intersection is not particularly limited, but the E* at this point of intersection is, for example, preferably not less than 1 MPa and more preferably not less than 5 MPa.

In the temperature distribution curve of the dynamic elastic modulus (E*) of the tread rubber that is obtained by plotting the E* with respect to the measurement temperature thereof, further preferably, the temperature at a point of intersection of a tangent line to the temperature distribution curve at -50°C and the tangent line to the temperature distribution curve at -20°C is not lower than -30°C and not higher than -10°C, and the E* at the point of intersection of the tangent line to the temperature distribution curve at -50°C and the tangent line to the temperature distribution curve at -20°C is not less than 700 MPa. Accordingly, dry grip performance, wet grip performance, and abrasion resistance can be further significantly improved in a well-balanced manner.

The reason why such an advantageous effect is achieved is not necessarily clear but is inferred as described below.

In the temperature distribution curve of the E* of the tread rubber that is obtained by plotting the E* with respect to the measurement temperature thereof, the point of intersection of the tangent line to the temperature distribution curve at -50°C and the tangent line to the temperature distribution curve at -20°C indicates the magnitude of the E* in a temperature region where the temperature dependency of the E* and contribution to grip performance are considered to be high. If the temperature at this point of intersection is not lower than -30°C and not higher than -10°C and the E* at this point of intersection is not less than 700 MPa, followability of the tread rubber to a road surface is higher and fracture resistance characteristics during running further improves. Accordingly, dry grip performance, wet grip performance, and abrasion resistance can be further significantly improved in a well-balanced manner.

Next, a method for drawing each tangent line, etc., will be described with reference to FIG. 1.

In FIG. 1, the example of the temperature distribution curve C1 of the E* of the tread rubber is depicted. The tangent line to the temperature distribution curve at -50°C means a tangent line L3 at a point P3 on the temperature distribution curve C1 at a temperature of -50°C. Similarly, the tangent line to the temperature distribution curve at -20°C

means the tangent line L1 at the point P1 on the temperature distribution curve C1 at a temperature of -20°C. The point of intersection of the tangent line to the temperature distribution curve at -50°C and the tangent line to the temperature distribution curve at -20°C means a point indicated by PM that is a point of intersection of the tangent line L3 and the tangent line L1. The temperature at this point of intersection means the temperature at the point indicated by PM, and the E* at this point of intersection means the E* at the point indicated by PM. When the temperature at the point indicated by PM is not lower than -30°C and not higher than -10°C and the E* at the point indicated by PM is not less than 700 MPa, dry grip performance, wet grip performance, and abrasion resistance can be further significantly improved in a well-balanced manner.

As for the method for drawing each tangent line, the temperature distribution curve of the E* of the tread rubber may be represented by a function, and a formula for each tangent line may be calculated on the basis of the function. Specifically, in the case where the function that represents the temperature distribution curve of the E* of the tread rubber is $y = f(x)$, the tangent line to the curve at a temperature of -50°C and the tangent line to the curve at a temperature of -20°C are represented by $y = f'(-50)(x+50)+f(-50)$ and $y = f'(-20)(x+20)+f(-20)$, respectively.

In the temperature distribution curve of the E* of the tread rubber, the temperature at the point of intersection of the tangent line to the temperature distribution curve at -50°C and the tangent line to the temperature distribution curve at -20°C is preferably not lower than -30°C and not higher than -10°C. Accordingly, dry grip performance, wet grip performance, and abrasion resistance can be further significantly improved in a well-balanced manner. The temperature at this point of intersection is more preferably not lower than -28°C and further preferably not lower than -25°C. The temperature at this point of intersection is more preferably not higher than -12°C and further preferably not higher than -15°C.

In the temperature distribution curve of the E* of the tread rubber, the E* at the point of intersection of the tangent line to the temperature distribution curve at -50°C and the tangent line to the temperature distribution curve at -20°C is preferably not less than 700 MPa. Accordingly, dry grip performance, wet grip performance, and abrasion resistance can be further significantly improved in a well-balanced manner. The E* at this point of intersection is more preferably not less than 800 MPa and further preferably not less than 1,000 MPa. The upper limit of the E* at this point of intersection is not particularly limited, but the E* at this point of intersection is, for example, preferably not greater than 10,000 MPa and more preferably not greater than 5,000 MPa.

If target values for the temperature and the E* at the point of intersection of tangent lines to the temperature distribution curve of the E* of the tread rubber at two different temperature points are determined, a person skilled in the art can produce a tread rubber that satisfies these target values.

Specifically, various methods that allow the E* to be changed can be used. For example, a method for adjusting the type or the blending amount of a rubber component, a method for adjusting the type, the form, or the blending amount of a filler, a method for adjusting the blending amount of a softener, a method for adjusting the type or the blending amount of a resin, etc., can be used. By combining these methods and the like, it is possible to produce a tread rubber in which the temperature and the E* at the point of intersection of the tangent line to the temperature distribution curve at -20°C and the tangent line to the temperature distribution curve at 30°C and the temperature and the E* at the point of intersection of the tangent line to the temperature distribution curve at -50°C and the tangent line to the temperature distribution curve at -20°C fall within the above ranges.

For the tread rubber, in the temperature distribution curve of E*, the temperature and the E* at the point of intersection of the tangent line to the temperature distribution curve at - 20°C and the tangent line to the temperature distribution curve at 30°C can be made to fall within the above ranges, for example, by blending a predetermined rubber component, a predetermined amount of silica, a silane coupling agent, and a predetermined amount of a resin, which will be described later, into a rubber composition for producing the tread rubber. As an example, it is important to use a predetermined rubber component, a predetermined amount of silica and a predetermined amount of a resin in combination.

Furthermore, for the tread rubber, in the temperature distribution curve of E*, the temperature and the E* at the point of intersection of the tangent line to the temperature distribution curve at -50°C and the tangent line to the temperature distribution curve at -20°C can be made to fall within the above ranges, for example, by blending a predetermined rubber component, a predetermined amount of silica, a silane coupling agent, and a predetermined amount of a resin into a rubber composition for producing the tread rubber. As an example, it is important to use a predetermined rubber component, a predetermined amount of silica, and a predetermined amount of a resin in combination.

The tread in the present invention is preferably produced by using a rubber composition that contains a rubber component including a styrene-butadiene rubber, silica, a silane coupling agent, and a resin, and that satisfies the following formulas (1) and (2). Accordingly, in the temperature distribution curve of the E* of the tread, the temperature and the E* at the point of intersection of the tangent line to the temperature distribution curve at -20°C and the tangent line to the temperature distribution curve at 30°C can be made to fall within the above ranges, so that the advantageous effects of the present invention can be suitably achieved.

$$A \geq 30 \quad (1)$$

$$43 \leq (A \times B)/C \leq 1400 \quad (2)$$

In the formulas (1) and (2), A represents the total styrene content (% by mass) of the rubber component.

In the formula (2), B represents the amount (parts by mass) of the silica per 100 parts by mass of the rubber component, and C represents the amount (parts by mass) of the resin per 100 parts by mass of the rubber component.

As the rubber component, for example, a diene-based rubber can be used.

Examples of the diene-based rubber include isoprene-based rubber, butadiene rubber (BR), styrene-butadiene rubber (SBR), styrene-isoprene-butadiene rubber (SIBR), ethylene-propylene-diene rubber (EPDM), chloroprene rubber (CR), and acrylonitrile butadiene rubber (NBR). In addition, examples of a rubber component other than the above rubbers include butyl-based rubber and fluorine rubber. These rubbers may be used individually, or two or more of these rubbers may be used in combination. As the rubber component, SBR, BR, and isoprene-based rubber are preferable, BR and SBR are more preferable, and BR and SBR are particularly preferably used in combination.

Here, the rubber component is a rubber having a weight-average molecular weight (Mw) of preferably not less than 200 thousand and more preferably not less than 350 thousand. The upper limit of the Mw is not particularly limited, but the Mw is preferably not greater than 4 million and more preferably not greater than 3 million.

In the present specification, the Mw and a number-average molecular weight (Mn) can be obtained by conversion, based on polystyrene standard, of a value measured by gel permeation chromatography (GPC) (GPC-8000 series manufactured by Tosoh Corporation, detector: differential refractometer, column: TSKGEL SUPERMULTIPORE HZ-M manufactured by Tosoh Corporation).

The rubber component may be an unmodified diene-based rubber, or may be a modified diene-based rubber.

The modified diene-based rubber only needs to be a diene-based rubber having a functional group that interacts with a filler such as silica, and examples of such a modified diene-based rubber include an end-modified diene-based rubber obtained by modifying at least one end of a diene-based rubber with a compound (modifier) having the functional group (an end-modified diene-based rubber having the functional group at an end thereof), a main chain-modified diene-based rubber having the functional group in the main chain thereof, a main chain/end-modified diene-based rubber having the functional group in the main chain and at an end thereof (for example, a main chain/end-modified diene-based rubber that has the functional group in the main chain thereof and in which at least one end thereof is modified with the modifier), and an end-modified diene-based rubber that is modified (coupled) by using a multifunctional compound having two or more epoxy groups in the molecule thereof and to which a hydroxyl group or an epoxy group is introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), and an alkoxysilyl group (preferably, an alkoxysilyl group having 1 to 6 carbon atoms) are preferable.

The SBR is not particularly limited, and, for example, an emulsion-polymerized styrene-butadiene rubber (E-SBR), a solution-polymerized styrene-butadiene rubber (S-SBR), and the like can be used. These rubbers may be used individually, or two or more of these rubbers may be used in combination.

The weight-average molecular weight (Mw) of the SBR is preferably not less than 400 thousand, more preferably not less than 1 million, and further preferably not less than 1.5 million. The upper limit of the Mw is not particularly limited, but the Mw is preferably not greater than 4 million and more preferably not greater than 3 million. If the Mw is within the above range, abrasion resistance becomes better, so that the advantageous effects of the present invention tend to be more favorably achieved.

The styrene content of the SBR is preferably not less than 5% by mass, more preferably not less than 10% by mass, and further preferably not less than 15% by mass. In addition, the styrene content is preferably not greater than 60% by mass and more preferably not greater than 40% by mass. If the styrene content is within the above range, the advantageous effects of the present invention are more favorably achieved.

In the present specification, the styrene content of the SBR is calculated by $^1$H-NMR measurement.

As the SBR, for example, SBRs manufactured by and available from Sumitomo Chemical Co., Ltd., JSR Corporation, Asahi Kasei Corporation, Zeon Corporation, etc., can be used.

The SBR may be an unmodified SBR, or may be a modified SBR. Examples of the modified SBR include

modified SBRs in which a functional group that is the same as that in the modified diene-based rubber is introduced.

In the case where SBR is contained, the amount of the SBR in 100% by mass of the rubber component is preferably not less than 60% by mass, more preferably not less than 70% by mass, and further preferably not less than 80% by mass. In addition, this amount is preferably not greater than 95% by mass and more preferably not greater than 90% by mass. When this amount is set to be within the above range, good wet grip performance is achieved, so that the advantageous effects of the present invention tend to be more favorably achieved.

The BR is not particularly limited, and a BR having a high cis content, a BR having a low cis content, a BR containing syndiotactic polybutadiene crystal, a BR synthesized using a rare earth-based catalyst (a rare earth BR), etc., can be used. These BRs may be used individually, or two or more of these BRs may be used in combination. Among them, a low-cis BR having a cis content of not greater than 40% by mass is preferable for the reason that dispersion and distribution of the silica improve.

In addition, the BR may be an unmodified BR, or may be a modified BR. Examples of the modified BR include modified BRs in which a functional group that is the same as that in the modified diene-based rubber is introduced.

As the BR, products of Ube Industries, Ltd., JSR Corporation, Asahi Kasei Corporation, Zeon Corporation, etc., can be used.

In the case where BR is contained, the amount of the BR in 100% by mass of the rubber component is not less than 5% by mass and more preferably not less than 10% by mass. In addition, this amount is preferably not greater than 40% by mass, more preferably not greater than 30% by mass, and further preferably not greater than 20% by mass. When this amount is set to be within the above range, good wet grip performance and abrasion resistance tend to be achieved.

Examples of the isoprene-based rubber include natural rubber (NR), isoprene rubber (IR), reformed NR, modified NR, and modified IR. As the NR, NRs that are generally used in the tire industry, such as SIR20, RSS#3, and TSR20 can be used. The IR is not particularly limited, and, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination.

The total styrene content of the rubber component preferably satisfies the following formula (1).

$$A \geq 30 \qquad (1)$$

In the formula (1), A represents the total styrene content (% by mass) of the rubber component.

In the formula (1), A is more preferably not less than 31 and further preferably not less than 32. In addition, the upper limit of A is not particularly limited, but A is, for example, preferably not greater than 60, more preferably not greater than 50, and further preferably not greater than 40. If A is within the above range, compatibility of the resin and the rubber component including the styrene-butadiene rubber improves, so that the advantageous effects of the present invention tend to be more favorably achieved.

Here, the total styrene content of the rubber component is $\Sigma$ (amount of each styrene-containing rubber $\times$ styrene content of each styrene-containing rubber / 100). For example, in the case where the rubber component includes 80% by mass of SBR (styrene content: 40% by mass) and 20% by mass of BR, the total styrene content of the rubber component is 32% by mass (= ($80 \times 40/100$).

From the viewpoint of the above performance balance, the rubber composition preferably contains silica as a filler. Examples of the silica include dry-process silica (anhydrous silica) and wet-process silica (hydrous silica). Among them, wet-process silica is preferable for the reason that it has a higher silanol group content. As commercially available products, products of Degussa, Rhodia, Tosoh Silica Corporation, Solvay Japan, Ltd., Tokuyama Corporation, etc., can be used. One of these types of silica may be used individually, or two or more thereof may be used in combination.

The amount of the silica per 100 parts by mass of the rubber component is preferably not less than 70 parts by mass, more preferably not less than 80 parts by mass, further preferably not less than 100 parts by mass, and particularly preferably not less than 110 parts by mass. When this amount is set to be not less than the lower limit, good dry grip performance, wet grip performance, abrasion resistance, and steering stability tend to be achieved. In addition, this amount is preferably not greater than 150 parts by mass, more preferably not greater than 130 parts by mass, and further preferably not greater than 120 parts by mass. When this amount is set to be not greater than the upper limit, good dispersibility tends to be achieved.

The nitrogen adsorption specific surface area ($N_2SA$) of the silica is preferably not less than 70 $m^2/g$, more preferably not less than 140 $m^2/g$, and further preferably not less than 160 $m^2/g$. When the $N_2SA$ of the silica is set to

be not less than the lower limit, good wet grip performance and breaking strength tend to be achieved. In addition, the upper limit of the $N_2SA$ of the silica is not particularly limited, but the $N_2SA$ of the silica is preferably not greater than 500 $m^2/g$, more preferably not greater than 300 $m^2/g$, and further preferably not greater than 250 $m^2/g$. When the $N_2SA$ of the silica is set to be not greater than the upper limit, good dispersibility tends to be achieved.

The $N_2SA$ of the silica is a value measured by the BET method according to ASTM D3037-93.

(Silane Coupling Agent)

In the case where the rubber composition contains silica, the rubber composition preferably further contains a silane coupling agent. The silane coupling agent is not particularly limited, and examples thereof include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3 -trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3 -triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. As commercially available products, products of Degussa, Momentive, Shin-Etsu Silicones, Tokyo Chemical Industry Co., Ltd., AZmax, Dow Corning Toray Co., Ltd., etc., can be used. These silane coupling agents may be used individually, or two or more of these silane coupling agents may be used in combination. Among them, for the reason that the advantageous effects of the present invention are more favorably achieved, sulfide silane coupling agents and mercapto silane coupling agents are preferable, and mercapto silane coupling agents are more preferable.

As the silane coupling agent, a silane coupling agent represented by the following formula (I) is preferably used. Accordingly, the dispersibility of the silica is increased, energy loss in a low-temperature range can be improved, and abrasion resistance also improves, so that the advantageous effects of the present invention are further favorably achieved.

[Chem. 1]

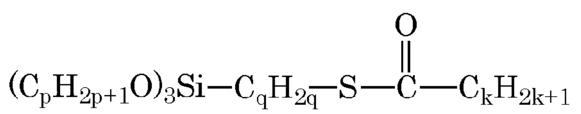

(I)

In the formula (I), p is an integer from 1 to 3, q is an integer from 1 to 5, and k is an integer from 5 to 12.

In the formula (I), although p is an integer from 1 to 3, p is preferably 2. If p is not greater than 3, a coupling reaction tends to be accelerated. Although q is an integer from 1 to 5, q is preferably 2 to 4 and more preferably 3. If q is an integer from 1 to 5, synthesis tends to be facilitated. Although k is an integer from 5 to 12, k is preferably 5 to 10, more preferably 6 to 8, and further preferably 7.

Examples of the silane coupling agent represented by the formula (1) include 3-octanoylthio-1-propyltriethoxysilane.

The amount of the silane coupling agent per 100 parts by mass of the silica is preferably not less than 3 parts by mass and more preferably not less than 5 parts by mass. If this amount is not less than 3 parts by mass, good breaking strength and the like tend to be achieved. In addition, this amount is preferably not greater than 20 parts by mass and more preferably not greater than 15 parts by mass. If this amount is not greater than 20 parts by mass, an effect corresponding to the blending amount tends to be achieved.

From the viewpoint of the above performance balance, the rubber composition preferably contains carbon black as a filler. The carbon black is not particularly limited, and examples thereof include N134, N110, N220, N234, N219, N339, N330, N326, N351, N550, and N762. As commercially available products, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used. These carbon blacks may be used individually, or two or more of these carbon blacks may be used in combination.

The amount of the carbon black per 100 parts by mass of the rubber component is preferably not less than 1

part by mass and more preferably not less than 3 parts by mass.

When this amount is set to be not less than the lower limit, good abrasion resistance, grip performance, etc., tend to be achieved. In addition, this amount is preferably not greater than 20 parts by mass and more preferably not greater than 15 parts by mass. When this amount is set to be not greater than the upper limit, good processability of the rubber composition tends to be achieved.

The nitrogen adsorption specific surface area ($N_2SA$) of the carbon black is preferably not less than 50 $m^2/g$, more preferably not less than 80 $m^2/g$, and further preferably not less than 100 $m^2/g$. When the $N_2SA$ is set to be not less than the lower limit, good abrasion resistance and grip performance tend to be achieved. In addition, the $N_2SA$ is preferably not greater than 200 $m^2/g$, more preferably not greater than 150 $m^2/g$, and further preferably not greater than 130 $m^2/g$. When $N_2SA$ is set to be not greater than the upper limit, good dispersion of the carbon black tends to be achieved.

The nitrogen adsorption specific surface area of the carbon black is a value measured according to JIS K6217-2: 2001.

The rubber composition may contain another filler other than the silica and the carbon black. The other filler is not particularly limited, but examples thereof include calcium carbonate, talc, alumina, clay, aluminum hydroxide, aluminum oxide, and mica.

The rubber composition may contain a plasticizer. The plasticizer is not particularly limited, but examples thereof include oils, liquid polymers (liquid diene-based polymers), and liquid resins. One of these plasticizers may be used individually, or two or more of these plasticizers may be used in combination.

In the case where a plasticizer is contained, the amount of the plasticizer per 100 parts by mass of the rubber component is preferably not greater than 30 parts by mass, more preferably not greater than 25 parts by mass, further preferably not greater than 20 parts by mass, and particularly preferably not greater than 15 parts by mass. In addition, the lower limit of this amount is not particularly limited, and the plasticizer does not have to be contained, but, for example, this amount may be 1 part by mass or greater, or may be 3 parts by mass or greater. If the amount of the plasticizer is within such a range, good wet grip performance tends to be achieved while good low fuel consumption performance is maintained.

Among the plasticizers, at least one plasticizer selected from the group consisting of oils, liquid polymers, and liquid resins is preferable, and oils are particularly preferable from the viewpoint of processability and wet grip performance.

From an environmental point of view, the plasticizer has a polycyclic aromatic content (PCA) of preferably less than 3% by mass and more preferably less than 1% by mass. The polycyclic aromatic content (PCA) is measured according to the 346/92 method of British Institute of Petroleum.

The oils are not particularly limited, and conventionally known oils including process oils such as paraffinic process oil, aromatic process oil, and naphthenic process oil, low-PCA (polycyclic aromatic) process oils such as TDAE and MES, vegetable fats and oils, mixtures thereof, etc., can be used. Among them, from the viewpoint of grip performance, aromatic process oil is preferable.

The liquid polymers (liquid diene-based polymers) are each a diene-based polymer in liquid form at normal temperature (25°C).

The liquid diene-based polymer has a weight-average molecular weight (Mw) of preferably $1.0\times10^3$ to $2.0\times10^5$ and more preferably $3.0\times10^3$ to $1.5\times10^4$, the weight-average molecular weight (Mw) being measured by gel permeation chromatography (GPC) in terms of polystyrene.

In the present specification, the Mw of the liquid diene-based polymer is a value that is measured by gel permeation chromatography (GPC) and obtained by polystyrene conversion.

Examples of the liquid diene-based polymers include liquid styrene-butadiene copolymers (liquid SBRs), liquid butadiene polymers (liquid BRs), liquid isoprene polymers (liquid IRs), and liquid styrene-isoprene copolymers (liquid SIRs).

The liquid resins are not particularly limited, but examples thereof include liquid aromatic vinyl polymers, coumarone-indene resins, indene resins, terpene resins, rosin resins, and hydrogenated products thereof.

The liquid aromatic vinyl polymers are each a resin obtained by polymerizing $\alpha$-methylstyrene and/or styrene, and examples thereof include liquid resins such as homopolymers of styrene, homopolymers of $\alpha$-methylstyrene, and copolymers of $\alpha$-methylstyrene and styrene.

The liquid coumarone-indene resins are each a resin containing coumarone and indene as main monomer components that form the skeleton (main chain) of the resin, and examples of monomer components that may be contained in the skeleton, other than coumarone and indene, include styrene, $\alpha$-methylstyrene, methylindene, and vinyltoluene.

The liquid indene resins are each a liquid resin containing indene as a main monomer component that forms the skeleton (main chain) of the resin.

The liquid terpene resins are liquid terpene-based resins typified by a resin obtained by polymerizing a terpene compound such as $\alpha$-pinene, $\beta$-pinene, camphene, and dipetene, and terpene phenol, which is a resin obtained by using

a terpene compound and a phenolic compound as raw materials.

The liquid rosin resins are liquid rosin-based resins typified by natural rosin, polymerized rosin, modified rosin, ester compounds thereof, and hydrogenated products thereof.

The rubber composition preferably contains a solid resin (a polymer in solid form at normal temperature (25°C), also simply referred to as "resin" in the present specification).

In the case where a solid resin is contained, the amount of the solid content per 100 parts by mass of the rubber component is preferably not less than 1 part by mass, more preferably not less than 3 parts by mass, further preferably not less than 5 parts by mass, still further preferably not less than 10 parts by mass, and particularly preferably not less than 15 parts by mass. In addition, this amount is preferably not greater than 70 parts by mass, more preferably not greater than 60 parts by mass, and further preferably not greater than 50 parts by mass. If this amount is within the above range, good dry grip performance and wet grip performance tend to be achieved.

The solid resin preferably has a softening point of not lower than 100°C. When such a resin having a high softening point is used, the compatibility with the styrene-butadiene rubber is enhanced and thus the dispersibility of the resin improves, and energy loss in a high-temperature range can be improved, so that the advantageous effects of the present invention are further favorably achieved. The softening point is more preferably not lower than 110°C and further preferably not lower than 120°C. On the other hand, the softening point is preferably not higher than 150°C, more preferably not higher than 140°C, and further preferably not higher than 130°C.

In the present specification, the softening point of a resin is a softening point that is measured with a ring and ball softening point measuring device according to JIS K6220-1: 2001 and that is a temperature at which a ball has descended.

The solid resin is not particularly limited, but examples thereof include solid styrene-based resins, coumarone-indene resins, terpene-based resins, p-t-butylphenol acetylene resins, acrylic-based resins, dicyclopentadiene-based resins (DCPD-based resins), C5-based petroleum resins, C9-based petroleum resins, and C5C9-based petroleum resins. These resins may be used individually, or two or more of these resins may be used in combination. Among them, terpene-based resins are preferable for the reason that the advantageous effects of the present invention are more favorably achieved. When a terpene-based resin is used as the solid resin, the compatibility with the styrene-butadiene rubber is enhanced and thus the dispersibility of the resin improves, and energy loss in a high-temperature range can be improved.

The solid styrene-based resins are each a solid polymer for which a styrene-based monomer is used as a constituent monomer, and examples of the solid styrene-based resins include a polymer obtained by polymerization with a styrene-based monomer as a main component (not less than 50% by mass). Specific examples of the solid styrene-based resins include homopolymers obtained by individually polymerizing styrene-based monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers each obtained by copolymerizing two or more styrene-based monomers, and copolymers of styrene-based monomers and other monomers that can be copolymerized with styrene-based monomers.

Examples of the other monomers include: acrylonitriles such as acrylonitrile and methacrylonitrile; acrylics; unsaturated carboxylic acids such as methacrylic acid; unsaturated carboxylic acid esters such as methyl acrylate and methyl methacrylate; dienes such as chloroprene and butadiene isoprene; olefins such as 1-butene and 1-pentene; α, β-unsaturated carboxylic acids or acid anhydrides thereof such as maleic anhydride; and the like.

Among them, solid α-methylstyrene-based resins (a-methylstyrene homopolymers, copolymers of α-methylstyrene and styrene, etc.) are preferable.

Examples of the solid coumarone-indene resins include solid resins having the same constituent units as the above-described coumarone-indene resins in liquid form.

Examples of the solid terpene-based resins include polyterpenes, terpene phenols, and aromatic modified terpene resins. Among them, for the reason that the advantageous effects of the present invention are more favorably achieved, terpene phenols and aromatic modified terpene resins are preferable, and aromatic modified terpene resins are more preferable.

The polyterpenes are resins obtained by polymerizing terpene compounds, and hydrogenated products thereof. The above terpene compounds are hydrocarbons represented by a composition of $(C_5H_8)_n$ and oxygenated derivatives thereof, and are compounds having, as a basic backbone, a terpene classified into monoterpene ($C_{10}H_{16}$), sesquiterpene ($C_{15}H_{24}$), diterpene ($C_{20}H_{32}$), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the solid polyterpenes include solid resins such as terpene resins formed from the above-described terpene compounds such as α-pinene resin, β-pinene resin, limonene resin, dipentene resin, and β-pinene-limonene resin, and hydrogenated terpene resins obtained by hydrogenating the terpene resins.

Examples of the solid terpene phenols include solid resins obtained by copolymerization of the above terpene compound and a phenolic compound, and solid resins obtained by hydrogenating the resins, and specific examples of

the solid terpene phenols include solid resins obtained by condensation of the above terpene compound, a phenolic compound, and formalin. Examples of the phenolic compounds include phenol, bisphenol A, cresol, and xylenol.

Examples of the solid aromatic modified terpene resins include solid resins obtained by modifying a terpene resin with an aromatic compound, and solid resins obtained by hydrogenating the resins. Here, the aromatic compound is not particularly limited as long as the aromatic compound is a compound having an aromatic ring. Examples of the aromatic compound include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes; coumarone; and indene.

Examples of the solid p-t-butylphenol acetylene resins include solid resins obtained by condensation reaction of p-t-butylphenol and acetylene.

The solid acrylic-based resins are not particularly limited, but a non-solvent type acrylic-based solid resin can be suitably used since a resin containing less impurities and having a sharp molecular weight distribution is obtained.

Examples of the solid non-solvent type acrylic resin include a (meth)acrylic-based resin (polymer) synthesized by a high-temperature continuous polymerization method (high-temperature continuous bulk polymerization method) (the methods disclosed in US Patent No. 4,414,370, Japanese Laid-Open Patent Publication No. S59-6207, Japanese Examined Patent Publication No. H5-58005, Japanese Laid-Open Patent Publication No. H1-313522, US Patent No. 5,010,166, annual search report of Toagosei Co., Ltd., TREND 2000, No. 3, pages 42-45, etc.) by avoiding use of a polymerization initiator, a chain transfer agent, an organic solvent, etc., which are sub-materials, as much as possible. In the present specification, (meth)acrylic means methacrylic and acrylic.

The solid acrylic-based resin preferably does not substantially contain a polymerization initiator, a chain transfer agent, an organic solvent, etc., which are sub-materials. In addition, the acrylic-based resin is preferably a resin that is obtained by continuous polymerization and has a relatively narrow composition distribution and a relatively narrow molecular weight distribution.

As described above, the solid acrylic-based resin is preferably a resin that does not substantially contain a polymerization initiator, a chain transfer agent, an organic solvent, etc., which are sub-materials, that is, a resin having a high purity. The purity of the solid acrylic-based resin (the proportion of resin contained in the resin) is preferably not less than 95% by mass and more preferably not less than 97% by mass.

Examples of the monomer component that forms the solid acrylic-based resin include (meth)acrylic acids, (meth)acrylic acid esters (alkyl esters, aryl esters, aralkyl esters, etc.), (meth)acrylamide, and (meth)acrylic acid derivatives such as (meth)acrylamide derivatives.

Moreover, as the monomer component that forms the solid acrylic-based resin, an aromatic vinyl such as styrene, $\alpha$-methylstyrene, vinyltoluene, vinylnaphthalene, divinylbenzene, trivinylbenzene, and divinylnaphthalene may be used together with (meth)acrylic acid or a (meth)acrylic acid derivative.

The solid acrylic-based resin may be a resin composed of only a (meth)acrylic component, or may be a resin also containing a component other than the (meth)acrylic component.

In addition, the solid acrylic-based resin may have a hydroxyl group, a carboxyl group, a silanol group, or the like.

As the plasticizer and the solid resin, for example, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., Sankyo Yuka Kogyo K.K., etc., can be used.

From the viewpoint of crack resistance, ozone resistance, etc., the rubber composition preferably contains an antioxidant.

The antioxidant is not particularly limited, but examples of the antioxidant include: naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N' -phenyl-p-phenylenediamine, and N,N' -di-2-naphthyl-p-phenylenediamine; quinoline-based antioxidants such as a polymer of 2,2,4-trimethyl-1,2-dihydroquinoline; monophenol antioxidants such as 2,6-di-t-butyl-4-methylphenol and styrenated phenol; and bis-, tris-, and poly-phenol antioxidants such as tetrakis-[methylene-3-(3',5'-di-t-butyl-4'-hydroxyphenyl)propionate]methane. These antioxidants may be used individually, or two or more of these antioxidants may be used in combination. Among them, the p-phenylenediamine antioxidants and the quinoline-based antioxidants are preferable, and N-(1,3-dimethylbutyl)-N'-phenyl-p-phenylenediamine and a polymer of 2,2,4-trimethyl-1,2-dihydroquinoline are more preferable.

As the antioxidant, for example, products of Seiko Chemical Co., Ltd., Sumitomo Chemical Co., Ltd., Ouchi Shinko Chemical Industrial Co., Ltd., Flexsys, etc., can be used.

In the case where an antioxidant is contained, the amount of the antioxidant per 100 parts by mass of the rubber component is preferably not less than 0.5 parts by mass and more preferably not less than 0.7 parts by mass. In addition, this amount is preferably not greater than 10 parts by mass and more preferably not greater than 7 parts by mass.

The rubber composition preferably contains stearic acid.

As the stearic acid, a conventionally known one can be used, and, for example, products of NOF Corporation, Kao Corporation, FUJIFILM Wako Pure Chemical Industries, Ltd., New Japan Chemical Co., Ltd., etc., can be used.

In the case where stearic acid is contained, the amount of the stearic acid per 100 parts by mass of the rubber component is preferably not less than 0.5 parts by mass and more preferably not less than 1.0 part by mass. In addition, this amount is preferably not greater than 5.0 parts by mass, more preferably not greater than 3.0 parts by mass, and further preferably not greater than 2.5 parts by mass. If this amount is within the above numerical range, good wet grip performance tends to be achieved.

The rubber composition preferably contains zinc oxide.

As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

In the case where zinc oxide is contained, the amount of the zinc oxide per 100 parts by mass of the rubber component is preferably 0.5 to 10 parts by mass and more preferably 1 to 5 parts by mass, from the viewpoint of the above performance balance.

The rubber composition may contain a wax. The wax is not particularly limited, and examples of the wax include petroleum waxes and natural waxes. In addition, a synthetic wax obtained by refining or chemically treating a plurality of waxes can also be used. These waxes may be used individually, or two or more of these waxes may be used in combination.

Examples of the petroleum wax include paraffin wax and microcrystalline wax. The natural wax is not particularly limited as long as it is wax derived from a material other than petroleum. Examples of the natural wax include: vegetable waxes such as candelilla wax, carnauba wax, Japan wax, rice wax, and jojoba wax; animal waxes such as beeswax, lanolin, and whale wax; mineral waxes such as ozokerite, ceresin, and petrolatum; and refined products thereof. As commercially available products, for example, products of Ouchi Shinko Chemical Industrial Co., Ltd., NIPPON SEIRO CO., LTD., Seiko Chemical Co., Ltd., etc. can be used. The amount of the wax may be set as appropriate in view of ozone resistance and cost.

In the case where a wax is contained, the amount of the wax per 100 parts by mass of the rubber component is preferably not less than 0.5 parts by mass and more preferably not less than 1 part by mass. In addition, this amount is preferably not greater than 10 parts by mass and more preferably not greater than 7 parts by mass.

The rubber composition preferably contains sulfur.

Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

As the sulfur, for example, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

In the case where sulfur is contained, the amount of the sulfur per 100 parts by mass of the rubber component is preferably not less than 0.1 parts by mass and more preferably not less than 0.5 parts by mass. In addition, this amount is preferably not greater than 10 parts by mass and more preferably not greater than 7 parts by mass. If this amount is within the above numerical range, the above advantageous effects tend to be favorably achieved.

The rubber composition preferably contains a vulcanization accelerator.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination. Among them, sulfenamide-based vulcanization accelerators and guanidine-based vulcanization accelerators are preferable.

In the case where a vulcanization accelerator is contained, the amount of the vulcanization accelerator per 100 parts by mass of the rubber component is preferably not less than 1 part by mass and more preferably not less than 3 parts by mass. In addition, this amount is preferably not greater than 10 parts by mass and more preferably not greater than 7 parts by mass. If this amount is within the above numerical range, good wet grip performance tends to be achieved.

In addition to the above components, the rubber composition can contain additives that are generally used in the tire industry, and examples of the additives include vulcanizing agents other than sulfur (for example, organic crosslinking agents and organic peroxides).

The rubber composition preferably satisfies the following formulas (1) and (2).

$$A \geq 30 \quad (1)$$

$$43 \leq (A \times B)/C \leq 1400 \quad (2)$$

In the formulas (1) and (2), A represents the total styrene content (% by mass) of the rubber component.
In the formula (2), B represents the amount (parts by mass) of the silica per 100 parts by mass of the rubber component, and C represents the amount (parts by mass) of the resin per 100 parts by mass of the rubber component.
In the formula (2), as for the lower limit of (A×B)/C, (A×B)/C is more preferably not less than 50, further preferably not less than 80, still further preferably not less than 100, particularly preferably not less than 150, and most preferably not less than 200. In addition, as for the upper limit of (A×B)/C, (A×B)/C is more preferably not greater than 1,300, further preferably not greater than 1,000, still further preferably not greater than 700, particularly preferably not greater than 500, and most preferably not greater than 300. If (A×B)/C is within the above range, the compatibility of the resin and the rubber component including the styrene-butadiene rubber in the rubber composition improves, and the E* in a temperature range in which contribution to grip performance is considered to be high decreases, so that the advantageous effects of the present invention tend to be more favorably achieved.
When the rubber composition satisfies the formulas (1) and (2), a tread produced by using the rubber composition can have, in a temperature distribution curve of E*, a temperature and E*, at a point of intersection of a tangent line to the temperature distribution curve at -20°C and a tangent line to the temperature distribution curve at 30°C, which are within the above ranges, so that the advantageous effects of the present invention can be favorably achieved.
In order for the rubber composition to satisfy the formulas (1) and (2), the type and the blending amount of the rubber component to be blended in the rubber composition and the blending amounts of the silica and the resin only need to be set as appropriate.
The rubber composition is produced by a general method. Specifically, for example, the rubber composition can be produced by a method in which the above respective components are kneaded using a Banbury mixer, a kneader, an open roll, or the like, and then vulcanization is performed.
As for the kneading conditions, in a base kneading step of kneading the additives other than a vulcanizing agent and the vulcanization accelerator, the kneading temperature is normally 50 to 200°C and preferably 80 to 190°C, and the kneading time is normally 30 seconds to 30 minutes and preferably 1 minute to 30 minutes. In a finish kneading step of kneading the vulcanizing agent and the vulcanization accelerator, the kneading temperature is normally not higher than 100°C and preferably room temperature to 80°C. In addition, a composition obtained by kneading the vulcanizing agent and the vulcanization accelerator is normally subjected to vulcanization processing such as press vulcanization. The vulcanization temperature is normally 120 to 200°C and preferably 140 to 180°C.
The pneumatic tire of the present invention is produced by a normal method using the above rubber composition. Specifically, an unvulcanized tire is formed by extruding a rubber composition obtained by blending the above components, in an unvulcanized state so as to correspond to a tread shape, and forming the extruded rubber composition together with other tire members on a tire forming machine by a general method. A tire is obtained by heating and pressurizing the unvulcanized tire in a vulcanizing machine.
The pneumatic tire of the present invention can be suitably used as a tire for a passenger car, a tire for a large passenger car or a large SUV, a heavy-duty tire for a truck or a bus, and a tire for a light truck.

EXAMPLES

The present invention will be specifically described by means of examples, but the present invention is not limited to these examples.
Various chemicals used in examples and comparative examples are collectively described below.

SBR1: solution-polymerized styrene-butadiene rubber, SPRINTAN SLR-6430 manufactured by Trinseo (styrene content: 40% by mass, Mw: 2 million).
SBR2: solution-polymerized styrene-butadiene rubber, Y031 manufactured by Asahi Kasei Corporation (styrene content: 27% by mass, Mw: 800 thousand)
BR: butadiene rubber, N103 manufactured by Asahi Kasei Chemicals Corporation (cis content: 38% by mass)
Carbon black: Seast N220 manufactured by Mitsubishi Chemical Corporation ($N_2SA$: 114 $m^2/g$)
Silica 1: ULTRASIL VN3 manufactured by Degussa ($N_2SA$: 172 $m^2/g$)
Silica 2: Zeosil Premium 200MP manufactured by Rhodia ($N_2SA$: 220 $m^2/g$)
Silica 3: ULTRASIL 9000GR manufactured by Degussa ($N_2SA$: 240 $m^2/g$)

Silane coupling agent 1: NXT (3-octanoylthio-1-propyltriethoxysilane) manufactured by Momentive
Silane coupling agent 2: Si266 (bis(3-triethoxysilylpropyl)disulfide) manufactured by Degussa
Resin 1: YS Resin TO-125 (aromatic modified terpene resin, softening point: 125°C) manufactured by Yasuhara Chemical Co., Ltd.
Resin 2: CLEARON M125 (hydrogenated aromatic modified terpene resin, softening point: 125°C) manufactured by Yasuhara Chemical Co., Ltd.
Plasticizer: A/O Mix (naphthenic process oil) manufactured by Sankyo Yuka Kogyo K.K.
Zinc oxide: two kinds of zinc oxide manufactured by MITSUI MINING & SMELTING CO., LTD.
Stearic acid: bead stearic acid, Tsubaki, manufactured by NOF Corporation
Antioxidant: Nocrac 6C (N-(1,3-dimethylbutyl)-N'-phenyl-p-phenylenediamine) manufactured by Ouchi Shinko Chemical Industrial Co., Ltd.
Sulfur: powdery sulfur manufactured by Tsurumi Chemical Industry Co., Ltd.
Vulcanization accelerator 1: Nocceler CZ (N-cyclohexyl-2-benzothiazolyl sulfenamide) manufactured by Ouchi Shinko Chemical Industrial Co., Ltd.
Vulcanization accelerator 2: Nocceler D (DPG, 1,3-diphenylguanidine) manufactured by Ouchi Shinko Chemical Industrial Co., Ltd.

(Examples and Comparative Examples)

In accordance with the blending contents shown in Tables 1 to 4, the materials other than the sulfur and the vulcanization accelerator were kneaded under a condition of 150°C for 5 minutes using a Banbury mixer manufactured by Kobe Steel, Ltd., to obtain a kneaded product. Next, the sulfur and the vulcanization accelerator were added to the obtained kneaded product, and the mixture was kneaded under a condition of 80°C for 5 minutes using an open roll to obtain an unvulcanized rubber composition. The obtained unvulcanized rubber composition was formed into the shape of a tread and attached together with other tire members to form an unvulcanized tire, and the unvulcanized tire was press-vulcanized under a condition of 170°C for 10 minutes to produce a test tire (size: 195/65R15). The following evaluations were made by using the obtained test tires, and the results are shown in Tables 1 to 4.

(Temperature Distribution Curve of Dynamic Elastic Modulus (E*))

For a tread rubber (after vulcanization) cut out from each test tire, a temperature distribution curve of a dynamic elastic modulus (E*) was measured in a temperature range of - 120°C to 70°C under the conditions of a frequency of 10Hz, an initial strain of 10%, a dynamic strain of 2%, an amplitude of $\pm$0.25%, and a temperature rise rate of 3°C/min using a viscoelasticity spectrometer manufactured by Iwamoto Seisakusho Co., Ltd. Then, numerical values were calculated on the basis of the obtained temperature distribution curve of the E*. The calculated values are shown in Tables 1 to 4.

(Dry Grip Performance)

The respective test tires were mounted to all the wheels of a vehicle (a front wheel drive vehicle with an engine displacement of 2000 cc, produced in Japan), and a braking distance from an initial speed of 100 km/h was obtained on a dry asphalt road surface (30°C). The braking distance is indicated as an index with the result of a corresponding reference comparative example being regarded as 100 (dry grip performance index). A higher index indicates that the braking distance is shorter and the dry grip performance is better. The index is obtained by the following equation.

$$\text{(Dry grip performance index)} = \text{(braking distance of reference comparative example)}/\text{(braking distance of each blending formula)} \times 100$$

(Wet Grip Performance)

The respective test tires were mounted to all the wheels of a vehicle (a front wheel drive vehicle with an engine displacement of 2000 cc, produced in Japan), and a braking distance from an initial speed of 100 km/h was obtained on a wet asphalt road surface (30°C). The braking distance is indicated as an index with the result of a corresponding reference comparative example being regarded as 100 (wet grip performance index). A higher index indicates that the braking distance is shorter and the wet grip performance is better. The index is obtained by the following equation.

$$(\text{Wet grip performance index}) = (\text{braking distance of reference comparative example})/(\text{braking distance of each blending formula}) \times 100$$

(Abrasion Resistance)

The respective test tires were mounted to all the wheels of a vehicle (a front wheel drive vehicle with an engine displacement of 2000 cc, produced in Japan), and the vehicle was actually caused to run on a test course with a dry asphalt road surface (30°C). The groove depth of the tire tread portion was measured after 8,000-km running, and the running distance reached when the groove depth of the tire decreased by 1 mm was calculated. The running distance is indicated as an index with the result of a corresponding reference comparative example being regarded as 100 (abrasion resistance index). A higher index indicates that the abrasion resistance is better. The index is obtained by the following equation.

$$(\text{Abrasion resistance index}) = (\text{running distance of each blending formula})/(\text{running distance of reference comparative example}) \times 100$$

(Combined Performance)

In Tables 1 to 4, the total of the dry grip performance index, the wet grip performance index, and the abrasion resistance index was evaluated as combined performance.

[Table 1]

| | | Comparative Example | | Example | Comparative Example | | | Example | | | | | | | | | | | |
|---|---|---|---|---|---|---|---|---|---|---|---|---|---|---|---|---|---|---|---|
| | | 1 (reference comparative example) | 2 | 1 | 2 | 3 | 4 | 3 | 4 | 5 | 6 | 7 | 8 | 9 | 10 | 11 | 12 | 13 | 14 |
| Blending amount (parts by mass) | SBR1 | - | - | 20 | 80 | 20 | 30 | 30 | 30 | 30 | 30 | 15 | 35 | 55 | 90 | 70 | 70 | 70 | 70 |
| | SBR2 | 80 | 80 | 60 | - | 45 | 50 | 50 | 50 | 50 | 50 | 70 | 50 | 30 | - | - | 15 | - | 15 |
| | BR | 20 | 20 | 20 | 20 | 35 | 20 | 20 | 20 | 20 | 20 | 15 | 15 | 15 | 10 | 30 | 15 | 30 | 15 |
| | Carbon black | 10 | 10 | 10 | 10 | 10 | 10 | 10 | 10 | 10 | 10 | - | - | - | - | 10 | 10 | 10 | 10 |
| | Silica 1 | 80 | 80 | 80 | 80 | 80 | 50 | 80 | 100 | 110 | 115 | 100 | 100 | 100 | 100 | 115 | 115 | 115 | 115 |
| | Silane coupling agent 1 | - | - | 6.4 | 6.4 | - | - | 6.4 | 8 | 8.8 | 9.2 | 8 | 8 | 8 | 8 | - | - | 9.2 | 9.2 |
| | Silane coupling agent 2 | 6.4 | 6.4 | - | - | 6.4 | 4 | - | - | - | - | - | - | - | - | 9.2 | 9.2 | - | - |
| | Resin 1 | 1 | 5 | 5 | 15 | 1 | 1 | 2 | 5 | 10 | 15 | 5 | 10 | 15 | 20 | 15 | 15 | 15 | 15 |
| | Plasticizer | 25 | 20 | 20 | 10 | 25 | 25 | 25 | 20 | 15 | 10 | 20 | 15 | 10 | 5 | 25 | 25 | 25 | 25 |
| | Zinc oxide | 2 | 2 | 2 | 2 | 2 | 2 | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Vulcanization accelerator 2 | 3 | 3 | 3 | 3 | 3 | 1 | 3 | 3.5 | 3.8 | 4.0 | 3 | 3 | 3 | 3 | 4 | 4 | 4 | 4 |
| Total styrene content | | 22 | 22 | 30 | 35 | 20 | 32 | 32 | 32 | 32 | 32 | 30 | 33 | 34 | 34 | 35 | 35 | 35 | 35 |
| Total styrene content×silica amount/resin amount | | 1760 | 352 | 480 | 187 | 1600 | 1080 | 1280 | 640 | 352 | 245 | 600 | 330 | 227 | 170 | 268 | 268 | 268 | 268 |
| Temperature (°C) at point of intersection of tangent line to temperature distribution curve at -20°C and tangent line to temperature distribution curve at 30°C | | -30 | -20 | -10 | 10 | 15 | -8 | -8 | -6 | -4 | -2 | -8 | -6 | 4 | 8 | -2 | -1 | 1 | 3 |
| E* (MPa) at point of intersection of tangent line to temperature distribution curve at -20°C and tangent line to temperature distribution curve at 30°C | | 60 | 28 | 25 | 24 | 18 | 35 | 30 | 20 | 16 | 10 | 28 | 20 | 18 | 12 | 28 | 20 | 18 | 12 |
| Temperature (°C) at point of intersection of tangent line to temperature distribution curve at -50°C and tangent line to temperature distribution curve at -20°C | | -60 | -50 | -25 | -10 | -40 | -28 | -28 | -22 | -16 | -11 | -35 | -30 | -10 | -5 | -20 | -20 | -20 | -20 |
| E* (MPa) at point of intersection of tangent line to temperature distribution curve at -50°C and tangent line to temperature distribution curve at -20°C | | 500 | 605 | 711 | 800 | 100 | 750 | 715 | 710 | 870 | 940 | 720 | 815 | 880 | 950 | 650 | 700 | 800 | 1000 |
| Evaluation | Dry grip performance index | 100 | 102 | 108 | 110 | 80 | 103 | 112 | 118 | 123 | 125 | 106 | 122 | 130 | 102 | 103 | 134 | 137 | 140 |
| | Wet grip performance index | 100 | 102 | 108 | 110 | 80 | 103 | 114 | 121 | 125 | 127 | 110 | 125 | 129 | 109 | 108 | 138 | 140 | 143 |
| | Abrasion resistance index | 100 | 102 | 108 | 110 | 110 | 103 | 113 | 118 | 121 | 124 | 104 | 117 | 119 | 111 | 110 | 136 | 138 | 141 |
| | Combined performance (total of three kinds of performance) | 300 | 306 | 324 | 330 | 270 | 309 | 339 | 357 | 369 | 376 | 320 | 364 | 378 | 322 | 321 | 408 | 415 | 424 |

[Table 2]

| | | Comparative Example | | Example | | |
|---|---|---|---|---|---|---|
| | | 21 (reference comparative example) | 22 | 21 | 22 | 23 |
| Blending amount (parts by mass) | SBR1 | - | 80 | 80 | 80 | 80 |
| | SBR2 | 80 | - | - | - | - |
| | BR | 20 | 20 | 20 | 20 | 20 |
| | Carbon black | 10 | 10 | 10 | 10 | 10 |
| | Silica 1 | 80 | 80 | 80 | 80 | 80 |
| | Silane coupling agent 1 | - | - | 6.4 | 6.4 | 6.4 |
| | Silane coupling agent 2 | 6.4 | 6.4 | - | - | - |
| | Resin 1 | - | - | 2 | 5 | 10 |
| | Plasticizer | 25 | 25 | 23 | 20 | 15 |
| | Zinc oxide | 2 | 2 | 2 | 2 | 2 |
| | Stearic acid | 2 | 2 | 2 | 2 | 2 |
| | Antioxidant | 2 | 2 | 2 | 2 | 2 |
| | Sulfur | 1.5 | 1.5 | 1.5 | 1.5 | 1.5 |
| | Vulcanization accelerator 1 | 2.0 | 2.0 | 2.0 | 2.0 | 2.0 |
| | Vulcanization accelerator 2 | 3 | 3 | 3 | 3 | 3 |
| Total styrene content | | 21.6 | 32 | 32 | 32 | 32 |
| Total styrene content×silica amount/resin amount | | - | - | 1280 | 512 | 256 |
| Temperature (°C) at point of intersection of tangent line to temperature distribution curve at -20°C and tangent line to temperature distribution curve at 30°C | | -30 | 12 | 8 | 6 | 4 |
| E* (MPa) at point of intersection of tangent line to temperature distribution curve at -20°C and tangent line to temperature distribution curve at 30°C | | 60 | 65 | 28 | 24 | 19 |
| Temperature (°C) at point of intersection of tangent line to temperature distribution curve at -50°C and tangent line to temperature distribution curve at -20°C | | -60 | -8 | -27 | -24 | -23 |
| E* (MPa) at point of intersection of tangent line to temperature distribution curve at -50°C and tangent line to temperature distribution curve at -20°C | | 500 | 640 | 745 | 780 | 814 |
| Evaluation | Dry grip performance index | 100 | 105 | 112 | 115 | 120 |
| | Wet grip performance index | 100 | 103 | 108 | 113 | 118 |
| | Abrasion resistance index | 100 | 110 | 116 | 120 | 123 |
| | Combined performance (total of three kinds of performance) | 300 | 318 | 336 | 348 | 361 |

[Table 3]

| | | Comparative Example | Example |
|---|---|---|---|
| | | 23 (reference comparative example) | 24 |
| Blending amount (parts by mass) | SBR1 | - | 90 |
| | SBR2 | 90 | - |
| | BR | 10 | 10 |
| | Carbon black | 5 | 5 |
| | Silica 1 | 100 | 100 |
| | Silane coupling agent 1 | - | 11 |
| | Silane coupling agent 2 | 11 | - |
| | Resin 1 | - | 25 |
| | Plasticizer | 35 | 10 |
| | Zinc oxide | 2 | 2 |
| | Stearic acid | 2 | 2 |
| | Antioxidant | 2 | 2 |
| | Sulfur | 1.5 | 1.5 |
| | Vulcanization accelerator 1 | 2.0 | 2.0 |
| | Vulcanization accelerator 2 | 3 | 3 |
| Total styrene content | | 24.3 | 36 |
| Total styrene content×silica amount/resin amount | | - | 144 |
| Temperature (°C) at point of intersection of tangent line to temperature distribution curve at -20°C and tangent line to temperature distribution curve at 30°C | | -20 | 4 |
| E* (MPa) at point of intersection of tangent line to temperature distribution curve at -20°C and tangent line to temperature distribution curve at 30°C | | 45 | 22 |
| Temperature (°C) at point of intersection of tangent line to temperature distribution curve at -50°C and tangent line to temperature distribution curve at -20°C | | -50 | -27 |
| E* (MPa) at point of intersection of tangent line to temperature distribution curve at -50°C and tangent line to temperature distribution curve at -20°C | | 608 | 870 |
| Evaluation | Dry grip performance index | 100 | 125 |
| | Wet grip performance index | 100 | 121 |
| | Abrasion resistance index | 100 | 127 |
| | Combined performance (total of three kinds of performance) | 300 | 373 |

[Table 4]

| | | Comparative Example | Example |
|---|---|---|---|
| | | 24 (reference comparative example) | 25 |
| Blending amount (parts by mass) | SBR1 | - | 75 |
| | SBR2 | 85 | 10 |
| | BR | 15 | 15 |
| | Carbon black | 1 | 1 |
| | Silica 1 | 115 | 115 |
| | Silane coupling agent 1 | - | 14 |
| | Silane coupling agent 2 | 14 | - |
| | Resin 1 | - | 45 |
| | Plasticizer | 45 | - |
| | Zinc oxide | 2 | 2 |
| | Stearic acid | 2 | 2 |
| | Antioxidant | 2 | 2 |
| | Sulfur | 1.5 | 1.5 |
| | Vulcanization accelerator 1 | 2.0 | 2.0 |
| | Vulcanization accelerator 2 | 3 | 3 |
| Total styrene content | | 23.0 | 32.7 |
| Total styrene content×silica amount/resin amount | | - | 84 |
| Temperature (°C) at point of intersection of tangent line to temperature distribution curve at -20°C and tangent line to temperature distribution curve at 30°C | | -25 | 8 |
| E* (MPa) at point of intersection of tangent line to temperature distribution curve at -20°C and tangent line to temperature distribution curve at 30°C | | 40 | 20 |
| Temperature (°C) at point of intersection of tangent line to temperature distribution curve at -50°C and tangent line to temperature distribution curve at -20°C | | -45 | -12 |
| E* (MPa) at point of intersection of tangent line to temperature distribution curve at -50°C and tangent line to temperature distribution curve at -20°C | | 590 | 823 |
| Evaluation | Dry grip performance index | 100 | 128 |
| | Wet grip performance index | 100 | 123 |
| | Abrasion resistance index | 100 | 130 |
| | Combined performance (total of three kinds of performance) | 300 | 381 |

Tables 1 to 4 demonstrate that dry grip performance, wet grip performance, and abrasion resistance can be improved in a well-balanced manner in the Examples in which, in a temperature distribution curve of a dynamic elastic modulus (E*) of a tread that is obtained by plotting the E* with respect to a measurement temperature thereof, the temperature at a point of intersection of a tangent line to the temperature distribution curve at -20°C and a tangent line to the temperature distribution curve at 30°C is not lower than -10°C and not higher than 10°C, and the E* at the point of intersection of the tangent line to the temperature distribution curve at - 20°C and the tangent line to the temperature distribution curve at 30°C is not greater than 30 MPa.

## Claims

1. A pneumatic tire having a tread, wherein
in a temperature distribution curve (C1) of a dynamic elastic modulus (E*) of the tread that is obtained by plotting the E* with respect to a measurement temperature thereof,
the temperature at a point of intersection (PL) of a tangent line (L1) to the temperature distribution curve (C1) at -20°C and a tangent line (L2) to the temperature distribution curve (C1) at 30°C is not lower than -10°C and not higher than 10°C, and the E* at the point of intersection (PL) of the tangent line (L1) to the temperature distribution curve (C1) at -20°C and the tangent line (L2) to the temperature distribution curve (C1) at 30°C is not greater than 30 MPa,
wherein the tread is produced by using a rubber composition that contains a rubber component including a styrene-butadiene rubber and a butadiene rubber, wherein the amount of the butadiene rubber in 100 % by mass of the rubber component is not less than 5 % by mass, and
wherein a temperature distribution curve of a dynamic elastic modulus (E*) of a tread rubber (after vulcanization) that is obtained by plotting the E* with respect to a measurement temperature thereof is obtained by measuring a temperature distribution curve of E* for the tread rubber (after vulcanization) in a temperature range of -120°C to 70°C under the conditions of a frequency of 10Hz, an initial strain of 10%, a dynamic strain of 2%, an amplitude of ±0.25%, and a temperature rise rate of 3°C/min using a viscoelasticity spectrometer.

2. The pneumatic tire according to claim 1, wherein the temperature at the point of intersection (PL) of the tangent line (L1) to the temperature distribution curve (C1) at -20°C and the tangent line (L2) to the temperature distribution curve (C1) at 30°C is not lower than - 10°C and not higher than 10°C, and the E* at the point of intersection (PL) of the tangent line (L1) to the temperature distribution curve (C1) at -20°C and the tangent line (L2) to the temperature distribution curve (C1) at 30°C is not greater than 20 MPa.

3. The pneumatic tire according to claim 1 or 2, wherein the temperature at the point of intersection (PL) of the tangent line (L1) to the temperature distribution curve (C1) at - 20°C and the tangent line (L2) to the temperature distribution curve (C1) at 30°C is not lower than -10°C and not higher than 10°C, and the E* at the point of intersection (PL) of the tangent line (L1) to the temperature distribution curve (C1) at -20°C and the tangent line (L2) to the temperature distribution curve (C1) at 30°C is not greater than 16 MPa.

4. The pneumatic tire according to any one of claims 1 to 3, wherein the temperature at the point of intersection (PL) of the tangent line (L1) to the temperature distribution curve (C1) at -20°C and the tangent line (L2) to the temperature distribution curve (C1) at 30°C is not lower than -10°C and not higher than 10°C, and the E* at the point of intersection (PL) of the tangent line (L1) to the temperature distribution curve (C1) at -20°C and the tangent line (L2) to the temperature distribution curve (C1) at 30°C is not greater than 10 MPa.

5. The pneumatic tire according to any one of claims 1 to 4, wherein, in the temperature distribution curve (C1) of the dynamic elastic modulus (E*) of the tread that is obtained by plotting the E* with respect to the measurement temperature thereof, further, the temperature at a point of intersection (PM) of a tangent line (L3) to the temperature distribution curve (C1) at -50°C and the tangent line (L1) to the temperature distribution curve (C1) at -20°C is not lower than -30°C and not higher than -10°C, and the E* at the point of intersection (PM) of the tangent line (L3) to the temperature distribution curve (C1) at -50°C and the tangent line (L1) to the temperature distribution curve (C1) at -20°C is not less than 700 MPa.

6. The pneumatic tire according to claim 5, wherein the temperature at the point of intersection (PM) of the tangent line (L3) to the temperature distribution curve (C1) at -50°C and the tangent line (L1) to the temperature distribution curve (C1) at -20°C is not lower than - 30°C and not higher than -10°C, and the E* at the point of intersection (PM) of the tangent line (L3) to the temperature distribution curve (C1) at -50°C and the tangent line (L1) to the temperature distribution curve (C1) at -20°C is not less than 800 MPa.

7. The pneumatic tire according to claim 5 or 6, wherein the temperature at the point of intersection (PM) of the tangent line (L3) to the temperature distribution curve (C1) at - 50°C and the tangent line (L1) to the temperature distribution curve (C1) at -20°C is not lower than -30°C and not higher than -10°C, and the E* at the point of intersection (PM) of the tangent line (L3) to the temperature distribution curve (C1) at -50°C and the tangent line (L1) to the temperature distribution curve (C1) at -20°C is not less than 1,000 MPa.

8. The pneumatic tire according to any one of claims 1 to 7, wherein the tread is produced by using a rubber composition

that contains a rubber component including a styrene-butadiene rubber, silica, a silane coupling agent, and a resin and, that satisfies the following formulas (1) and (2),

$$A \geq 30 \qquad (1)$$

$$43 \leq (A \times B)/C \leq 1400 \qquad (2)$$

wherein, in the formulas (1) and (2), A represents a total styrene content (% by mass) of the rubber component, and in the formula (2), B represents an amount (parts by mass) of the silica per 100 parts by mass of the rubber component, and C represents an amount (parts by mass) of the resin per 100 parts by mass of the rubber component.

**9.** The pneumatic tire according to claim 8, wherein an amount of the styrene-butadiene rubber in 100% by mass of the rubber component is not less than 60% by mass.

**10.** The pneumatic tire according to claim 8 or 9, wherein
the rubber composition further contains an oil, and
an amount of the oil per 100 parts by mass of the rubber component is not greater than 15 parts by mass.

**11.** The pneumatic tire according to any one of claims 8 to 10, wherein the styrene-butadiene rubber has a weight-average molecular weight of not less than 400 thousand.

## Patentansprüche

**1.** Luftreifen mit einem Laufstreifen, wobei

in einer Temperaturverteilungskurve (C1) eines dynamischen Elastizitätsmoduls (E*) des Laufstreifens, die durch Auftragen des E* gegen eine Messtemperatur desselben erhalten ist,
die Temperatur an einem Schnittpunkt (PL) einer Tangente (L1) an die Temperaturverteilungskurve (C1) bei -20°C und einer Tangente (L2) an die Temperaturverteilungskurve (C1) bei 30°C nicht niedriger als -10°C und nicht höher als 10°C ist, und der E* an dem Schnittpunkt (PL) der Tangente (L1) an die Temperaturverteilungskurve (C1) bei -20°C und der Tangente (L2) an die Temperaturverteilungskurve (C1) bei 30°C nicht größer als 30 MPa ist,
wobei der Laufstreifen unter Verwendung einer Kautschukzusammensetzung hergestellt ist, welche eine Kautschukkomponente enthält, die einen Styrol-Butadien-Kautschuk und einen Butadienkautschuk umfasst, wobei die Menge des Butadienkautschuks in 100 Massenprozent der Kautschukkomponente nicht kleiner als 5 Massenprozent ist, und
wobei eine Temperaturverteilungskurve eines dynamischen Elastizitätsmoduls (E*) eines Laufstreifengummis (nach der Vulkanisation), die durch Auftragen des E* gegen eine Messtemperatur desselben erhalten ist, durch Messen einer Temperaturverteilungskurve von E* für den Laufstreifengummi (nach der Vulkanisation) in einem Temperaturbereich von -120°C bis 70°C unter den Bedingungen einer Frequenz von 10 Hz, einer anfänglichen Dehnung von 10%, einer dynamischen Dehnung von 2%, einer Amplitude von ±0,25% und einer Temperaturanstiegsrate von 3°C/min unter Verwendung eines Viskoelastizitätsspektrometers erhalten ist.

**2.** Luftreifen nach Anspruch 1, wobei die Temperatur an dem Schnittpunkt (PL) der Tangente (L1) an die Temperaturverteilungskurve (C1) bei -20°C und der Tangente (L2) an die Temperaturverteilungskurve (C1) bei 30°C nicht niedriger als -10°C und nicht höher als 10°C ist, und der E* an dem Schnittpunkt (PL) der Tangente an die Temperaturverteilungskurve (C1) bei -20°C und der Tangente (L2) an die Temperaturverteilungskurve (C1) bei 30°C nicht größer als 20 MPa ist.

**3.** Luftreifen nach Anspruch 1 oder 2, wobei die Temperatur an dem Schnittpunkt (PL) der Tangente (L1) an die Temperaturverteilungskurve (C1) bei -20°C und der Tangente (L2) an die Temperaturverteilungskurve (C1) bei 30°C nicht niedriger als -10°C und nicht höher als 10°C ist, und der E* an dem Schnittpunkt (PL) der Tangente an die Temperaturverteilungskurve (C1) bei -20°C und der Tangente (L2) an die Temperaturverteilungskurve (C1) bei 30°C nicht größer als 16 MPa ist.

4. Luftreifen nach einem der Ansprüche 1 bis 3, wobei die Temperatur an dem Schnittpunkt (PL) der Tangente (L1) an die Temperaturverteilungskurve (C1) bei -20°C und der Tangente (L2) an die Temperaturverteilungskurve (C1) bei 30°C nicht niedriger als -10°C und nicht höher als 10°C ist, und der E* an dem Schnittpunkt (PL) der Tangente an die Temperaturverteilungskurve (C1) bei -20°C und der Tangente (L2) an die Temperaturverteilungskurve (C1) bei 30°C nicht größer als 10 MPa ist.

5. Luftreifen nach einem der Ansprüche 1 bis 4, wobei in der Temperaturverteilungskurve (C1) des dynamischen Elastizitätsmoduls (E*) des Laufstreifens, die durch Auftragen des E* gegen die Messtemperatur desselben erhalten ist, zudem die Temperatur an einem Schnittpunkt (PM) einer Tangente (L3) an die Temperaturverteilungskurve (C1) bei -50°C und der Tangente (L1) an die Temperaturverteilungskurve (C1) an die Temperaturverteilungskurve bei -20°C nicht niedriger als -30°C und nicht höher als -10°C ist, und der E* an dem Schnittpunkt (PM) der Tangente (L3) an die Temperaturverteilungskurve (C1) bei -50°C und der Tangente (L1) an die Temperaturverteilungskurve (C1) bei -20°C nicht kleiner als 700 MPa ist.

6. Luftreifen nach Anspruch 5, wobei die Temperatur an dem Schnittpunkt (PM) der Tangente (L3) an die Temperaturverteilungskurve (C1) bei -50°C und der Tangente (L1) an die Temperaturverteilungskurve (C1) bei -20°C nicht niedriger als -30°C und nicht höher als -10°C ist, und der E* an dem Schnittpunkt (PM) der Tangente (L3) an die Temperaturverteilungskurve (C1) bei -50°C und der Tangente (L1) an die Temperaturverteilungskurve (C1) bei -20°C nicht kleiner als 800 MPa ist.

7. Luftreifen nach Anspruch 5 oder 6, wobei die Temperatur an dem Schnittpunkt (PM) der Tangente (L3) an die Temperaturverteilungskurve (C1) bei -50°C und der Tangente (L1) an die Temperaturverteilungskurve (C1) bei -20°C nicht niedriger als -30°C und nicht höher als -10°C ist, und der E* an dem Schnittpunkt (PM) der Tangente (L3) an die Temperaturverteilungskurve (C1) bei -50°C und der Tangente (L1) an die Temperaturverteilungskurve (C1) bei -20°C nicht kleiner als 1000 MPa ist.

8. Luftreifen nach einem der Ansprüche 1 bis 7, wobei der Laufstreifen unter Verwendung einer Kautschukzusammensetzung hergestellt ist, welche eine Kautschukkomponente enthält, die einen Styrol-Butadien-Kautschuk, Siliciumdioxid, ein Silan-Kopplungsmittel und ein Harz umfasst, und welche die folgenden Formeln (1) und (2) erfüllt,

$$A \geq 30 \qquad (1)$$

$$43 \leq (A \times B)/C \leq 1400 \qquad (2)$$

wobei, in den Formeln (1) und (2), A einen Gesamt-Styrolgehalt (Massenprozent) der Kautschukkomponente darstellt und, in der Formel (2), B eine Menge (Massenteile) des Siliciumdioxids pro 100 Massenteile der Kautschukkomponente darstellt und C eine Menge (Massenteile) des Harzes pro 100 Massenteile der Kautschukkomponente darstellt.

9. Luftreifen nach Anspruch 8, wobei eine Menge des Styrol-ButadienKautschuks in 100 Massenprozent der Kautschukkomponente nicht kleiner als 60 Massenprozent ist.

10. Luftreifen nach Anspruch 8 oder 9, wobei

die Kautschukzusammensetzung zudem ein Öl enthält, und
eine Menge des Öls pro 100 Massenteile der Kautschukkomponente nicht größer als 15 Massenteile ist.

11. Luftreifen nach einem der Ansprüche 8 bis 10, wobei der Styrol-Butadien-Kautschuk ein gewichtsmittleres Molekulargewicht von nicht kleiner als vierhunderttausend aufweist.

## Revendications

1. Pneumatique ayant une bande de roulement, dans lequel dans une courbe de distribution de température (C1) d'un module élastique dynamique (E*) de la bande de roulement qui est obtenue en portant sur un graphe E* par rapport à une de ses températures de mesure,

la température à un point d'intersection (PL) d'une ligne tangente (L1) à la courbe de distribution de température (C1) à -20 °C et d'une ligne tangente (L2) à la courbe de distribution de température (C1) à 30 °C est non inférieure à -10 °C et non supérieure à 10 °C, et le E* au point d'intersection (PL) de la ligne tangente (L1) à la courbe de distribution de température (C1) à -20 °C et de la ligne tangente (L2) à la courbe de température de distribution (C1) à 30 °C est non supérieur à 30 MPa,
la bande de roulement étant produite en utilisant une composition de caoutchouc qui contient un composant de caoutchouc comprenant un caoutchouc de styrène-butadiène et un caoutchouc de butadiène, la quantité du caoutchouc de butadiène dans 100 % en masse du composant de caoutchouc étant de pas moins de 5 % en masse, et une courbe de distribution de température d'un module élastique dynamique (E*) d'un caoutchouc de bande de roulement (après vulcanisation) qui est obtenue en portant sur un graphe le E* par rapport à une de ses températures de mesure est obtenu en mesurant une courbe de distribution de température de E* pour le caoutchouc de bande de roulement (après vulcanisation) dans une plage de température de -120 °C à 70 °C sous les conditions d'une fréquence de 10 Hz, une contrainte initiale de 10 %, une contrainte dynamique de 2 %, une amplitude de ± 0,25 % et une vitesse d'augmentation de température de 3 °C/minute en utilisant un spectromètre de viscoélasticité.

2. Pneumatique selon la revendication 1, dans lequel la température au point d'intersection (PL) de la ligne tangente (L1) à la courbe de distribution de température (C1) à -20 °C et de la ligne tangente (L2) à la courbe de distribution de température (C1) est non inférieure à -10 °C et non supérieure à 10 °C, et le E* au point d'intersection (PL) de la ligne tangente (L1) à la courbe de distribution de température (C1) à -20 °C et de la ligne tangente (L2) à la courbe de distribution de température (C1) à 30 °C n'est pas supérieure à 20 MPa.

3. Pneumatique selon la revendication 1 ou 2, dans lequel la température au point d'intersection (PL) de la ligne tangente (L1) à la courbe de distribution de température (C1) à -20 °C et de la ligne tangente (L2) à la courbe de distribution de température (C1) à 30 °C est non inférieure à -10 °C et non supérieure à 10 °C, et le E* au point d'intersection (PL) de la ligne tangente (L1) à la courbe de distribution de température (C1) à -20 °C et de la ligne tangente (L2) à la courbe de distribution de température (C1) à 30 °C est non supérieur à 16 MPa.

4. Pneumatique selon l'une quelconque des revendications 1 à 3, dans lequel la température au point d'intersection (PL) de la ligne tangente (L1) à la courbe de distribution de température (C1) à -20 °C et de la ligne tangente (L2) à la courbe de distribution de température (C1) à 30 °C est non inférieure à -10 °C et non supérieure à 10 °C, et le E* au point d'intersection (PL) de la ligne tangente (L1) à la courbe de distribution de température (C1) à -20 °C et de la ligne tangente (L2) à la courbe de distribution de température (C1) à 30 °C est non supérieur à 10 MPa.

5. Pneumatique selon l'une quelconque des revendications 1 à 4, dans lequel, dans la courbe de distribution de température (C1) du module élastique dynamique (E*) de la bande de roulement qui est obtenu en portant sur un graphe le E* par rapport à une de ses températures de mesure, en outre, la température à un point d'intersection (PM) d'une ligne tangente (L3) à la courbe de distribution de température (C1) à -50 °C et de la ligne tangente (L1) à la courbe de distribution de température (C1) à -20 °C est non inférieure à -30 °C et non supérieure à -10 °C, et le E* au point d'intersection (PM) de la ligne tangente (L3) à la courbe de distribution de température (C1) à -50 °C et de la ligne tangente (L1) à la courbe de distribution de température (C1) à -20 °C est de pas moins de 700 MPa.

6. Pneumatique selon la revendication 5, dans lequel la température au point d'intersection (PM) de la ligne tangente (L3) à la courbe de distribution de température (C1) à -50 °C et de la tangente (L1) à la courbe de distribution de température (C1) à -20 °C est non inférieure à -30 °C et non supérieure à -10 °C, et le E* au point d'intersection (PM) de la ligne tangente (L3) à la courbe de distribution de température (C1) à -50 °C et de la ligne tangente (L1) à la courbe de distribution de température (C1) à -20 °C est de pas moins de 800 MPa.

7. Pneumatique selon la revendication 5 ou 6, dans lequel la température au point d'intersection (PM) de la ligne tangente (L3) à la courbe de distribution de température (C1) à -50 °C et de la ligne tangente (L1) à la courbe d distribution de température (C1) à -20 °C est non inférieure à -30 °C et non supérieure à -10 °C, et le E* au point d'intersection (PM) de la ligne tangente (L3) à la courbe de distribution de température (C1) à -50 °C et de la ligne tangente (L1) à la courbe de distribution de température (C1) à -20 °C est de pas moins de 1000 MPa.

8. Pneumatique selon l'une quelconque des revendications 1 à 7, dans lequel la bande de roulement est produite en utilisant une composition de caoutchouc qui contient un composant de caoutchouc comprenant un caoutchouc de styrène-butadiène, de la silice, un agent de couplage silane et une résine et, qui satisfait les formules (1) et (2) suivantes,

$$A \geq 30 \quad (1)$$

$$43 \leq (AxB)/C \leq 1400 \quad (2)$$

dans lesquelles , dans les formules (1) et (2), A représente une teneur en styrène totale (% en masse) du composant de caoutchouc, et dans la formule (2), B représente une quantité (parties en masse) de la silice par 100 parties en masse du composant de caoutchouc, et C représente une quantité (parties en masse) de la résine par 100 parties en masse du composant de caoutchouc.

**9.** Pneumatique selon la revendication 8, dans lequel une quantité du caoutchouc de styrène-butadiène dans 100 % en masse du composant de caoutchouc est de pas moins de 60 % en masse.

**10.** Pneumatique selon la revendication 8 ou 9, dans lequel
la composition de caoutchouc contient en outre une huile, et
une quantité de l'huile par 100 parties en masse du composant de caoutchouc est de pas plus de 15 parties en masse.

**11.** Pneumatique selon l'une quelconque des revendications 8 à 10, dans lequel le caoutchouc de styrène-butadiène a un poids moléculaire moyen en poids de pas moins de 400 mille.

**FIG. 1**

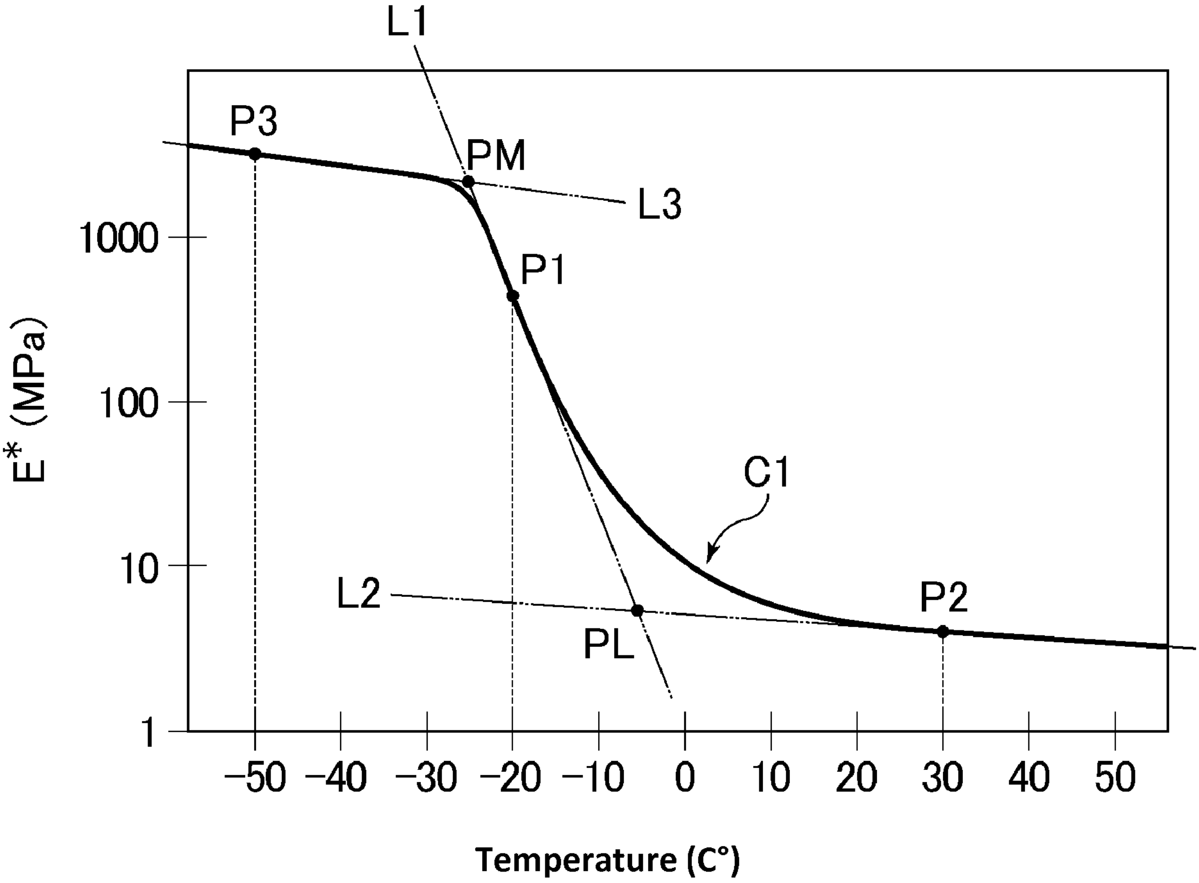
L1
P3
PM
L3
1000
P1
E* (MPa)
100
C1
10
L2
P2
PL
1
−50 −40 −30 −20 −10 0 10 20 30 40 50
Temperature (C°)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014503619 W
- JP 2013544936 W
- US 20130237653 A1
- WO 2017195567 A1
- US 2019136019 A1
- US 20180215202 A1
- US 20130059965 A1
- US 4414370 A
- JP S596207 B
- JP H558005 B
- JP H1313522 B
- US 5010166 A


### Non-patent literature cited in the description


- TREND. Toagosei Co., Ltd, 2000, 42-45